# EUROPEAN PATENT APPLICATION

(11) **EP 2 930 556 A1**
(43) Date of publication of application: **14.10.2015**
(21) Application number: 15162924.3
(22) Date of filing: 09.04.2015
(51) Int. Cl.: G02F 1/13357

(54) **DISPLAY DEVICE**

(30) Priority: 11.04.2014 JP 2014081871
(71) Applicant: Funai Electric Co., Ltd., Daito-shi, Osaka 574-0013 (JP)
(72) Inventor: Nameda, Makoto, Daito-shi, Osaka 574-0013 (JP)
(74) Representative: Grünecker Patent- und Rechtsanwälte PartG mbB

(57) **Abstract**

A display device (100, 101, 102, 103) includes a display portion (1), a light source (7, 9) arranged on the rear side of the display portion, an optical member (11, 12) arranged between the display portion and the light source, a support member (13, 23) that supports the surface side of the optical member on which the light source is arranged, and an optical path changing member (14, 14a, 15, 18, 19) arranged in the optical path of direct light from the light source to the support member.

## Description

### BACKGROUND OF THE INVENTION

### Field of the Invention

The present invention relates to a display device, and more particularly, it relates to a display device including a support member.

### Description of the Background Art

A display device including a support member is known in general, as disclosed in International Publication No. 2011-010487, for example.

The aforementioned International Publication No. 2011-010487 discloses a display device including a support pin (support member). This display device includes a display portion, the support pin that has a columnar shape and supports optical members, and a plurality of light sources that are aligned in the display device and emit light to the optical members.

In the display device according to the aforementioned International Publication No. 2011-010487, however, the light emitted from the light sources is emitted to the support pin and is blocked by the support pin, whereby shadows may be disadvantageously generated on the display portion and the optical member on the extension of the path of the blocked light and may be disadvantageously viewed.

### SUMMARY OF THE INVENTION

The present invention has been proposed in order to solve the aforementioned problem, and an object of the present invention is to provide a display device capable of significantly reducing or preventing viewing of a shadow generated on a display portion.

In order to attain the aforementioned object, a display device according to an aspect of the present invention includes a display portion, a light source arranged on the rear side of the display portion, an optical member arranged between the display portion and the light source, a support member that supports the surface side of the optical member on which the light source is arranged, and an optical path changing member arranged in the optical path of direct light from the light source to the support member.

In the display device according to this aspect of the present invention, as hereinabove described, the optical path changing member is arranged in the optical path of the direct light from the light source to the support member so as to block the direct light to the support member, whereby the amount of the direct light from the light source to the support member is reduced by the optical path changing member, and hence shadows generated on the display portion and the optical member on the extension of the optical path blocked by the support member is lightened due to the reduction in the amount of the direct light from the light source to the support member. Consequently, viewing of a shadow generated on the display portion can be significantly reduced or prevented. Thus, viewing of the shadow generated on the display portion can be significantly reduced or prevented even in the case where the support member is arranged at any position, and hence the degree of freedom of arrangement of the support member can be increased.

In the aforementioned display device according to this aspect, the optical path changing member preferably has at least one property of light-blocking, diffusing, refracting, diffracting, and attenuating. According to this structure, the amount of the direct light from the light source to the support member can be easily reduced.

In the aforementioned display device according to this aspect, the optical path changing member is preferably arranged in a region that connects the outer periphery of the support member that faces the light source and the light source. According to this structure, the amount of the direct light from the light source to a facing surface of the support member is further reduced, and hence the shadows on the display portion and the optical member can be further lightened. Consequently, viewing of the shadow generated on the display portion can be further significantly reduced or prevented.

In the aforementioned display device according to this aspect, a plurality of optical path changing members are preferably arranged with respect to a plurality of support members that face the light source. According to this structure, the amount of the direct light to the plurality of support members is further reduced, and hence the shadows on the display portion and the optical member caused by the direct light from the light source can be lightened. Consequently, viewing of the shadow on a wider region of the display portion can be significantly reduced or prevented.

In the aforementioned display device according to this aspect, the optical path changing member is preferably arranged at a position where the relationship x < y is satisfied when x represents a distance between the optical path changing member and the light source and y represents a distance between the optical path changing member and the support member. According to this structure, a distance from the optical path changing member to the optical member is increased as compared with the case where the optical path changing member is arranged at a position where the relationship x ≥ y is satisfied. The distance from the optical path changing member to the optical member is increased, and hence other light (light from another light source, for example) comes around the side of the optical path changing member on which a shadow is generated. Thus, a shadow generated by emission of light to the optical path changing member can be further lightened. Furthermore, the direct light from the light source to the support member is emitted to be widened from the light source, and hence an increase in the size of the optical path changing member can be significantly reduced or prevented by the small distance between the optical path changing member and the light source, as compared with the case where the optical path changing member is arranged at a position closer to the support member than the light source.

In the aforementioned display device according to this aspect, a plurality of light sources are preferably provided, and the optical path changing member is preferably arranged between at least the light source arranged within a prescribed distance from the support member of the plurality of light sources and the support member. In the case where the plurality of light sources are provided, the amount of direct light from a light source arranged relatively close to the support member of the plurality of light sources is relatively large in the direct light emitted to the support member. In view of this point, according to the present invention, the optical path changing member is arranged between the light source arranged within the prescribed distance from the support member of the plurality of light sources and the support member, whereby the amount of the direct light from the light source (the light source arranged relatively close to the support member) arranged within the prescribed distance can be reduced. Consequently, the shadows generated on the display portion and the optical member on the extension of the optical path blocked by the support member can be effectively lightened.

In this case, in the support member, the cross-section parallel to the optical member preferably has a rectangular shape, and the short side of the cross-section preferably faces the light source arranged within the prescribed distance. In the case where in the support member, the cross-section parallel to the optical member has the rectangular shape, shadows are more easily generated on the display portion and the optical member on the extension of the optical path blocked by the support member in the case where the direct light from the light source is emitted to the short side of the cross-section as compared with the case where the direct light from the light source is emitted to the long side of the cross-section. Focusing on this point, according to the present invention, the optical path changing member is arranged between the light source arranged within the prescribed distance from the support member of the plurality of light sources and the support member, and the short side of the cross-section faces the light source arranged within the prescribed distance, whereby the shadows on the display portion and the optical member caused by the direct light emitted to the short side of the cross-section where a shadow is relatively easily generated can be more effectively lightened.

In the aforementioned display device including the support member having the rectangular cross-section, the proportion of a portion of a surface of the light source arranged within the prescribed distance that faces the short side of the cross-section is preferably larger than the proportion of a portion of the surface of the light source arranged within the prescribed distance that faces the long side of the cross-section. According to this structure, the amount of the direct light emitted to the short side of the cross-section on which a shadow is relatively easily generated can be more reliably reduced, and hence the shadows generated on the display portion and the optical member can be more reliably lightened.

In the aforementioned display device including the optical path changing member arranged between the light source and the support member, the support member is preferably gradually tapered toward the optical member. A shadow is easily generated on the optical member in the vicinity of the support member, and hence the support member is preferably thinned as much as possible. When the support member is relatively thinned, however, it is difficult to ensure the strength of the support member. Regarding these points, according to the present invention, the support member is gradually tapered toward the optical member, whereby a portion of the support member closer to the optical member can be relatively thinned, and a portion of the support member opposite to the optical member can be relatively thickened. Consequently, generation of a shadow on the optical member in the vicinity of the support member can be significantly reduced or prevented by relatively thinning the portion of the support member closer to the optical member while the strength of the support member is increased by relatively thickening the portion of the support member opposite to the optical member.

The aforementioned display device according to this aspect preferably further includes a reflection sheet that includes a bottom surface portion and an inclined portion that surrounds the bottom surface portion and reflects light from the light source, and the support member is preferably located in the inclined portion of the reflection sheet. According to this structure, the length of the support member between the reflection sheet and the optical member can be reduced as compared with the case where the support member is located in the bottom surface portion of the reflection sheet, and hence generation of the shadows on the display portion and the optical member resulting from emission of the direct light to the support member can be significantly reduced or prevented by the reduction in the length of the support member.

In this case, the light source and the optical path changing member are preferably located in the bottom surface portion. According to this structure, the optical path changing member can be arranged at a position closer to the light source than the support member arranged in the inclined portion, and hence an increase in the size of the optical path changing member can be significantly reduced or prevented by the small distance between the optical path changing member and the light source, as compared with the case where the optical path changing member is arranged at the position closer to the support member than the light source.

In the aforementioned display device according to this aspect, the support member is preferably made of a transparent or translucent member. According to this structure, transmission of the light from the light source is allowed, and hence generation of the shadows on the display portion and the optical member can be significantly reduced or prevented as compared with the case where the support member is light-blocking and blocks the light from the light source.

In the aforementioned display device including the optical path changing member arranged between the light source and the support member, the light source preferably includes a plurality of point light source groups arranged at an interval, where a plurality of point light sources are arranged in a row or in a column at an interval, the support member is preferably arranged between the plurality of point light source groups, and the optical path changing member is preferably arranged between a point light source arranged closest to the support member of the plurality of point light sources and the support member. In the case where there are the plurality of point light sources, a shadow caused by emission of light from the point light source arranged closest thereto of the plurality of point light sources to the support member is most easily viewed. In view of this point, according to the present invention, the optical path changing member is arranged between the point light source arranged closest to the support member of the plurality of point light sources and the support member, whereby the amount of direct light emitted from the point light source arranged closest thereto to the support member can be reduced. Consequently, shadows generated on the display portion and the optical member on the extension of the optical path blocked by the support member can be more effectively lightened.

In the aforementioned display device in which the light source and the optical path changing member are located in the bottom surface portion, the support member preferably includes a contact portion that comes into contact with the optical member, and in a direction perpendicular to the optical member, the length of the optical path changing member is preferably larger than a length from the bottom surface portion to a line segment that connects the light source that corresponds to a position where the optical path changing member is arranged and the contact portion. According to this structure, the amount of the direct light emitted from the light source to the vicinity of the contact portion of the support member can be reduced, and hence the shadows generated on the display portion and the optical member on the extension of the optical path blocked by the vicinity of the contact portion of the support member can be lightened. Consequently, viewing of the shadow generated on the display portion in the vicinity of the contact portion of the support member can be significantly reduced or prevented. Generally, the shadow generated on the display portion in the vicinity of the contact portion of the support member is easily viewed, and hence as in the present invention, viewing of the shadow on the display portion in the vicinity of the contact portion of the support member is significantly reduced or prevented, whereby viewing of the shadow generated on the display portion can be more effectively significantly reduced or prevented.

In the aforementioned display device according to this aspect, a plurality of support members are preferably provided, and the plurality of support members are preferably arranged at positions line-symmetric with respect to the light source, as viewed from the side of the optical member. According to this structure, the amount of shadowing caused by emission of the direct light to the support member arranged on one side with respect to the light source is equal to the amount of shadowing caused by emission of the direct light to the support member arranged on the other side with respect to the light source, and hence unevenness of luminance on the entire display portion and the entire optical member can be reduced.

In the aforementioned display device according to this aspect, the optical path changing member is preferably in a convex lens shape, and the focal distance of the optical path changing member is preferably smaller than a distance between the optical path changing member and the support member. According to this structure, after condensed between the optical path changing member and the support member, light incident on the optical path changing member is magnified and emitted to the support member, and hence the amount of the light emitted to the support member can be reduced. Consequently, viewing of the shadow generated on the display portion can be further significantly reduced or prevented.

The aforementioned display device according to this aspect preferably further includes a reflection sheet that reflects light from the light source, and the optical path changing member is preferably provided in a portion of the reflection sheet. According to this structure, an increase in the number of types of components in the display device can be significantly reduced or prevented.

In this case, the reflection sheet preferably has an opening at a position that corresponds to the arrangement position of the light source, and the optical path changing member is preferably provided in the vicinity of the opening. According to this structure, the optical path changing member can be arranged at the position closer to the light source than the support member, and hence an increase in the size of the optical path changing member can be further significantly reduced or prevented by the small distance between the optical path changing member and the light source, as compared with the case where the optical path changing member is arranged at the position closer to the support member than the light source.

In the aforementioned display device including the reflection sheet having the opening, the light source preferably includes a light emitting device and a light source lens that covers the light emitting device, and the optical path changing member preferably comes into contact with the light source lens and is preferably located on the side of the light source lens closer to the optical member. According to this structure, the optical path changing member is deformed in contact with the light source lens when the light emitting device and the light source lens are covered with the reflection sheet, whereby the optical path changing member can protrude from the opening toward the optical member. Consequently, the number of steps required to assemble the display device can be reduced as compared with the case where the reflection sheet and the optical path changing member are assembled (mounted) individually.

In the aforementioned display device according to this aspect, a surface of the optical path changing member preferably includes a crimped surface. According to this structure, the direct light from the light source can be diffused by the crimped surface of the optical path changing member, and hence the amount of the direct light from the light source to the support member can be easily reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a liquid crystal television set according to a first embodiment of the present invention;
Fig. 2 is a rear elevational view showing the overall structure of the liquid crystal television set according to the first embodiment of the present invention;
Fig. 3 is a sectional view taken along the line 200-200 in Fig. 2;
Fig. 4 is a sectional view of the liquid crystal television set according to the first embodiment of the present invention;
Fig. 5 is an exploded perspective view of the liquid crystal television set according to the first embodiment of the present invention;
Fig. 6 is a plan view of a reflection sheet according to the first embodiment of the present invention;
Fig. 7 is a diagram showing the relationship between distances between LEDs and panel posts according to the first embodiment of the present invention and the intensity of light at the positions of the panel posts;
Fig. 8 is a diagram showing the relationship between the intensity of light emitted to the panel posts according to the first embodiment of the present invention and shadow density;
Fig. 9 is an enlarged view of a portion of the reflection sheet according to the first embodiment of the present invention, denoted by a symbol A;
Fig. 10 is a sectional view of a liquid crystal television set according to a second embodiment of the present invention;
Fig. 11 is a front elevational view of an optical path changing member according to the second embodiment of the present invention;
Fig. 12 is a sectional view of a liquid crystal television set according to a third embodiment and a first modification of the third embodiment of the present invention;
Fig. 13 is a plan view of a reflection sheet according to a second modification of the first to third embodiments of the present invention; and
Fig. 14 is a sectional view taken along the line 300-300 in Fig. 13.

### DESCRIPTION OF THE PREFERRED EMBODIMENTS

Embodiments of the present invention are hereinafter described with reference to the drawings.

### (First Embodiment)

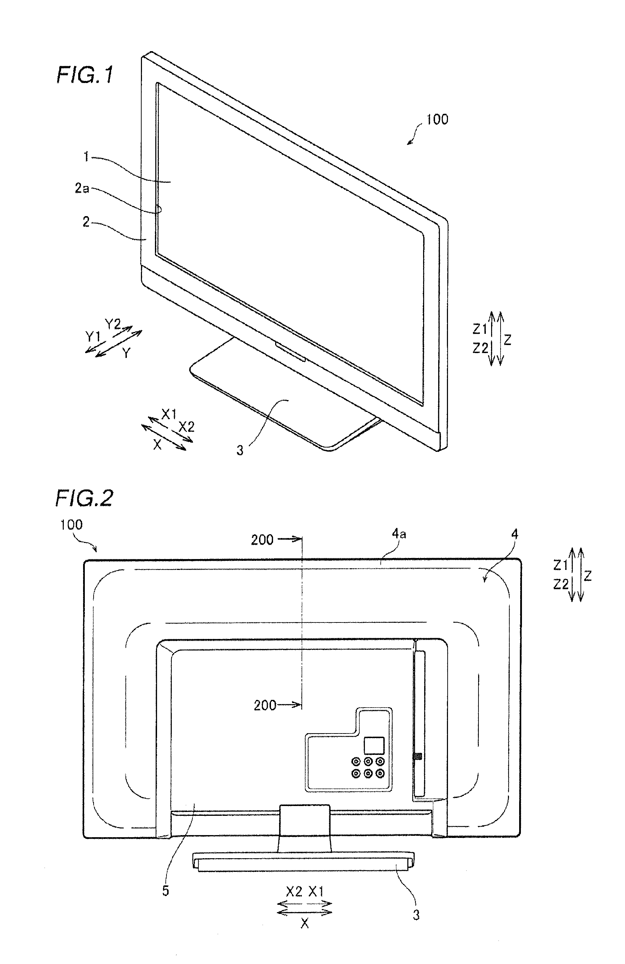

The structure of a liquid crystal television set 100 according to a first embodiment of the present invention is now described with reference to Figs. 1 to 9. The liquid crystal television set 100 is an example of the "display device" in the present invention.

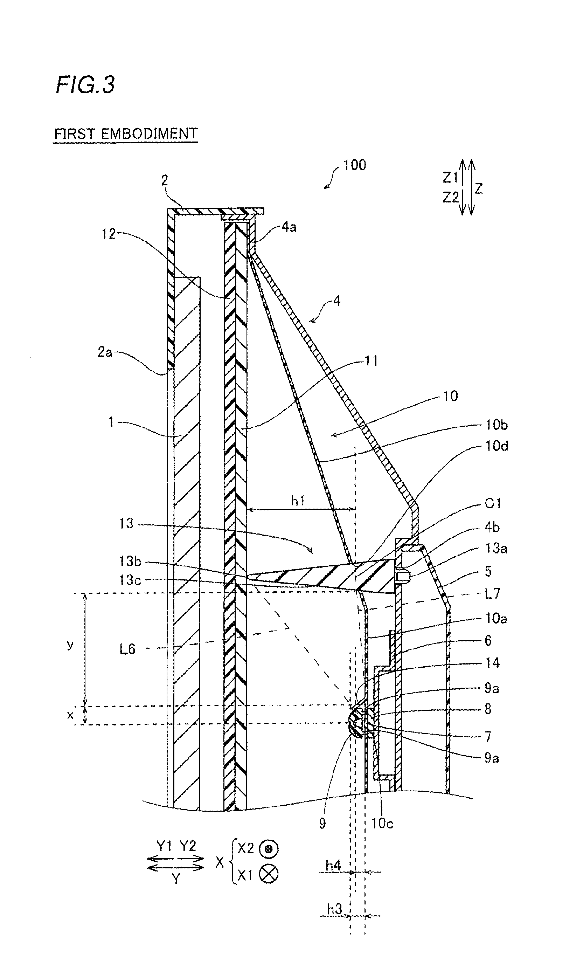

As shown in Figs. 1 and 2, the liquid crystal television set 100 includes a display portion 1 that includes a liquid crystal cell on which pictures are displayed, a front housing 2 that supports the display portion 1 from the front side (a side along arrow Y1) and is made of plastic, and a stand member 3 that supports the liquid crystal television set 100 from below (a side along arrow Z2) and is made of plastic. Specifically, the front housing 2 is in the form of a frame having a rectangular outer shape in a plan view (as viewed from the side along arrow Y1). A rectangular opening 2a is provided in the vicinity of a central portion of the front housing 2 to expose the display portion 1 to the front side. As shown in Fig. 3, the front housing 2 has a recess shape recessed forward (along arrow Y1).

As shown in Fig. 3, the liquid crystal television set 100 includes a rear frame 4 combined with the front housing 2 from the rear side (a side along arrow Y2), made of metal. This rear frame 4 has a rectangular edge 4a fitted in the rear side of the front housing 2. The rear frame 4 has a recess shape recessed rearward (along arrow Y2). The rear frame 4 is fixed to the front housing 2 by screw members (not shown). A cover member 5 having a rectangular shape smaller than the rear frame 4, made of plastic is arranged on the rear side of the rear frame 4. The cover member 5 is provided to cover various substrates (not shown) such as a power supply substrate and a signal processing substrate arranged on the rear surface of the rear frame 4. The cover member 5 is fixed to the rear frame 4 by screw members (not shown). The rear frame 4 and the cover member 5 constitute a rear housing that corresponds to the front housing 2.

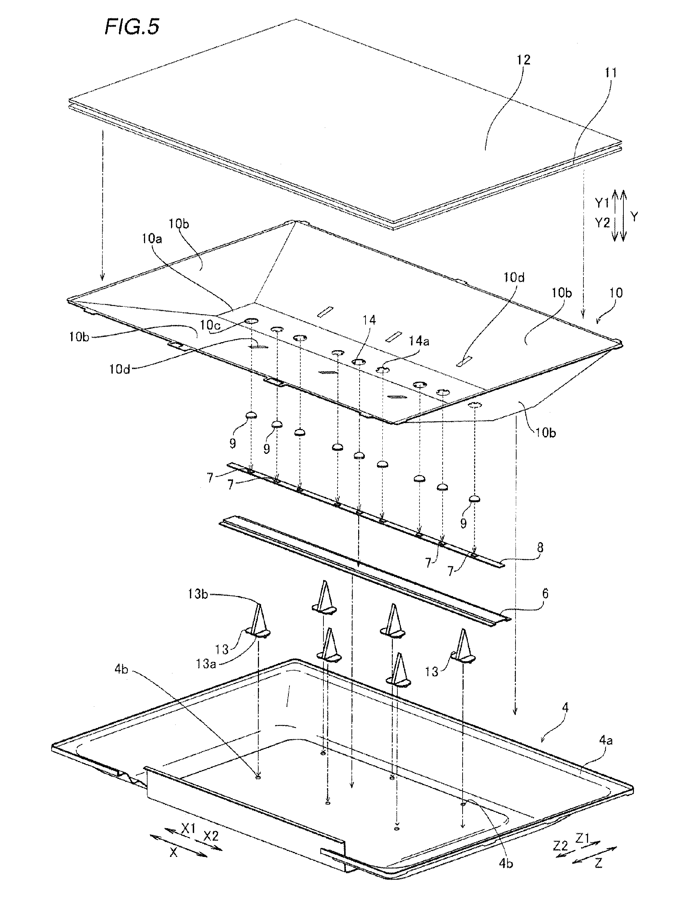

As shown in Fig. 5, a heat sink 6 made of sheet metal is arranged on the front surface (a surface along arrow Y1) of the rear frame 4. A substrate 8 mounted with LEDs (light emitting diodes) 7 that emit light to the display portion 1 from the rear side (the side along arrow Y2) is arranged on the front surface of the heat sink 6. The LEDs 7 are examples of the "light source" or the "light emitting device" in the present invention.

As shown in Fig. 5, a plurality of LEDs 7 are mounted on the front surface of the substrate 8 at intervals along the extensional direction (direction X) of the substrate 8. As shown in Fig. 3, light source lenses 9 that cover the LEDs 7 are mounted on the front surface (the surface along arrow Y1) of the substrate 8 mounted with the LEDs 7. These light source lenses 9 are made of plastic such as acrylic plastic and widen the emission angle of the light emitted from the LEDs 7. The light source lenses 9 are provided with columnar bosses 9a that extend from the bottom surfaces of the light source lenses 9 toward the substrate 8. These bosses 9a are bonded to the front surface of the substrate 8, whereby the light source lenses 9 are mounted at positions on the front surface of the substrate 8 that correspond to the LEDs 7. The light source lenses 9 are examples of the "light source" in the present invention.

As shown in Fig. 5, a reflection sheet 10 that reflects the light emitted from the LEDs 7 toward the display portion 1 and is made of plastic (such as PET (polyethylene terephthalate)) is arranged on the substrate 8 from the front side (the side along arrow Y1) of the light source lenses 9. This reflection sheet 10 has a shape (a recess shape recessed to the side along arrow Y2) along the rear frame 4 in a state where the same is arranged on the front surface of the substrate 8. Specifically, the reflection sheet 10 includes a reflection sheet bottom surface portion 10a having a rectangular shape that extends in a right-left direction (direction X) and four reflection sheet inclined portions 10b arranged to surround the four sides of the reflection sheet bottom surface portion 10a. As shown in Fig. 3, the reflection sheet bottom surface portion 10a is formed to extend parallel to a diffuser plate 11 and a polarization filter 12. The reflection sheet inclined portions 10b are formed to extend inclinedly from ends of the reflection sheet bottom surface portion 10a toward the edge 4a of the rear frame 4. The diffuser plate 11 and the polarization filter 12 are examples of the "optical member" in the present invention. The reflection sheet bottom surface portion 10a is an example of the "bottom surface portion" in the present invention. The reflection sheet inclined portions 10b are examples of the "inclined surface portion" in the present invention.

As shown in Fig. 5, the diffuser plate 11 is in the form of a flat plate that extends in a direction Z and the direction X. The polarization filter 12 that aligns the polarization direction of light transmitted through the diffuser plate 11 and emits the light to the display portion 1 is arranged between the diffuser plate 11 and the display portion 1. The polarization filter 12 is formed to extend in the direction Z and the direction X and is in the form of a flat plate similar to the diffuser plate 11.

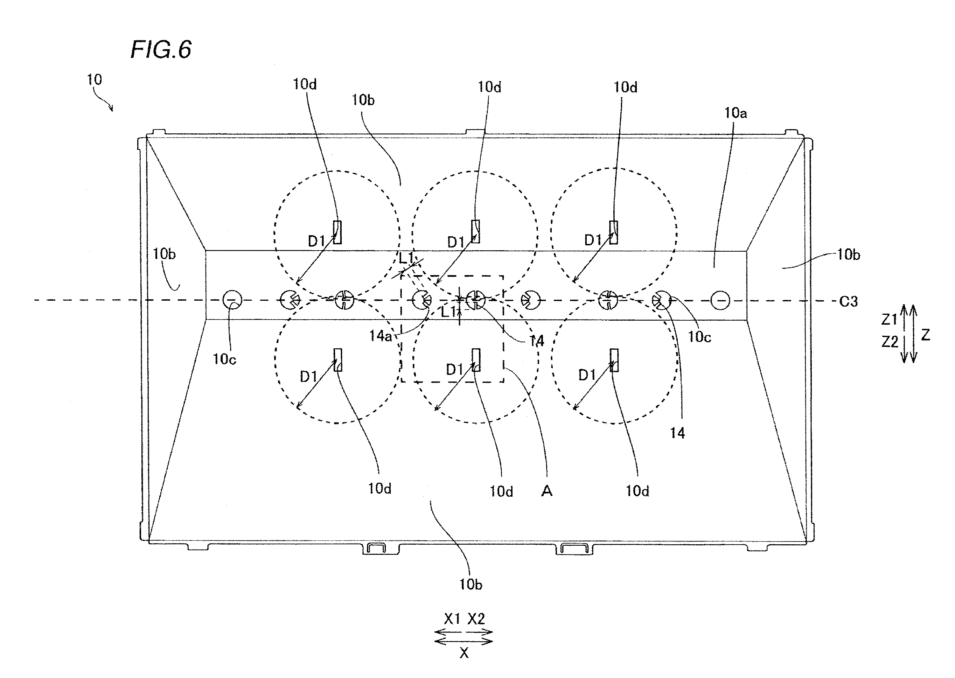

According to the first embodiment, the LEDs 7 and optical path changing members 14 are located in the reflection sheet bottom surface portion 10a, as shown in Fig. 6, and panel posts 13 are located in the reflection sheet inclined portions 10b. Specifically, in the reflection sheet bottom surface portion 10a of the reflection sheet 10, light source openings 10c are aligned at intervals in the right-left direction (direction X) at positions that correspond to the arrangement positions of the plurality of LEDs 7 (light source lenses 9). The reflection sheet inclined portions 10b are provided with panel post openings 10d formed to allow the panel posts 13 to pass through the reflection sheet 10 so as to support the sides of the diffuser plate 11 and the polarization filter 12 closer to the LEDs 7 (the side along arrow Y2). The light source openings 10c are provided with optical path changing members 14 and 14a described later. The optical path changing members 14 are arranged with respect to all the panel posts 13 opposed to the LEDs 7. The panel posts 13 are examples of the "support member" in the present invention. The light source openings 10c are examples of the "opening" in the present invention.

As shown in Figs. 3 and 5, the panel posts 13 are made of transparent or translucent members (transparent or translucent plastic or the like). A plurality of panel post fixing openings 4b formed to allow fixing portions 13a of the panel posts 13 to be fitted thereinto are provided in the front surface (the surface along arrow Y1) of the rear frame 4. The fixing portions 13a of the panel posts 13 each are provided with a pair of hook portions and hardly come off the panel post fixing openings 4b when fitted into the panel post fixing openings 4b. Thus, the panel posts 13 are fixed to the rear frame 4.

As shown in Fig. 6, six panel posts 13 are provided, and the six panel posts 13 are arranged at positions line-symmetric with respect to the LEDs 7 (with respect to a centerline C3 in Fig. 6), as viewed from the side along arrow Y1.

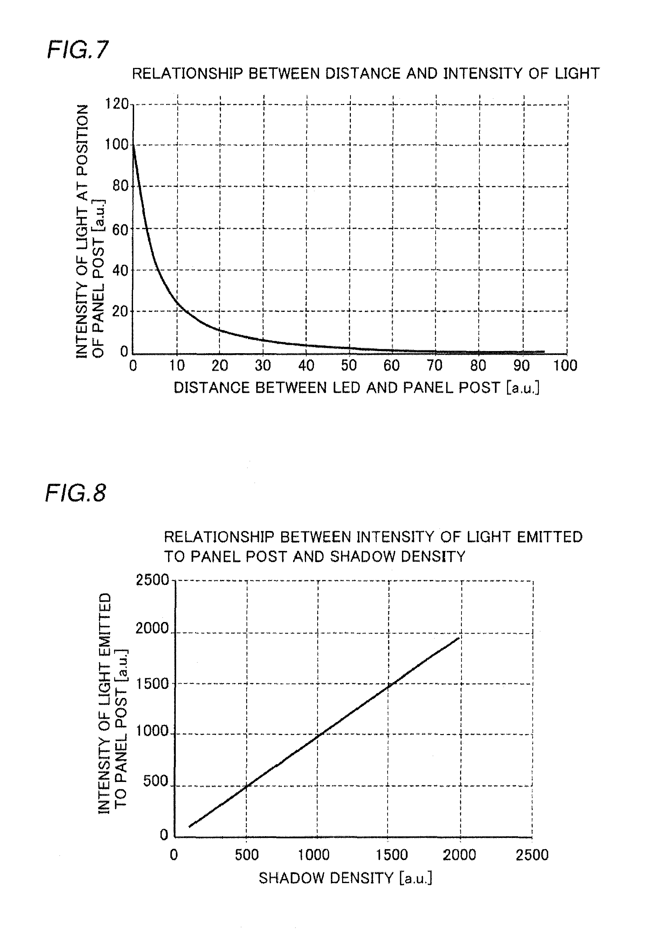

As shown in Fig. 7, the light intensity at the positions of the panel posts 13 is inversely proportional to the square of a distance between the LEDs 7 and the panel posts 13. As described above, the six panel posts 13 are arranged at the positions line-symmetric with respect to the LEDs 7, and hence distances between the LEDs 7 and the line-symmetric panel posts 13 are equal to each other. Therefore, the intensity of light emitted to the line-symmetric panel posts 13 is equal to each other.

As shown in Fig. 8, the intensity of the light emitted to the panel posts 13 bears a proportionate relationship to the density of a shadow generated on the diffuser plate 11. In other words, the intensity of the light emitted to the line-symmetric panel posts 13 is equal to each other, and hence the density of the shadow generated on the diffuser plate 11 is also equalized on the entire diffuser plate 11. Thus, unevenness of the density on the entire diffuser plate 11 is significantly reduced or prevented, and hence unevenness of luminance on the entire display portion 1 can be significantly reduced or prevented.

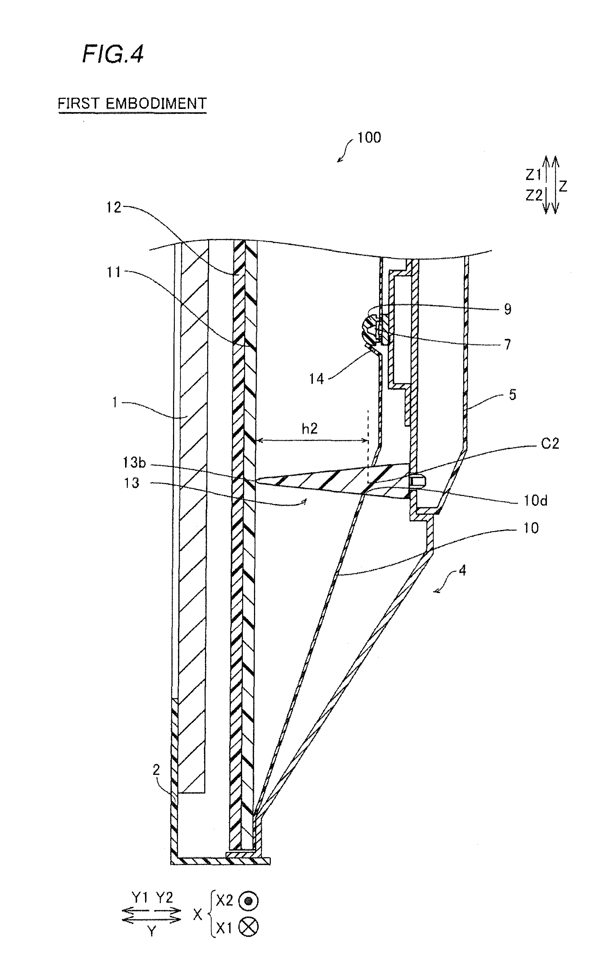

The panel posts 13 and the light source openings lOc are provided at positions where heights h1 from intersections C1 (see Fig. 3) between panel posts 13 arranged in panel post openings 10d located on the side along arrow Z1 of the light source openings 10c and the reflection sheet 10 to tip ends of the panel posts 13 that come into contact with the diffuser plate 11 are equal to heights h2 from intersections C2 (see Fig. 4) between panel posts 13 arranged in panel post openings 10d located on the side along arrow Z2 of the light source openings 10c and the reflection sheet 10 to tip ends of the panel posts 13 that come into contact with the diffuser plate 11.

As shown in Fig. 3, the panel posts 13 include contact portions 13b (the tip ends of the panel posts 13) that come into contact with the diffuser plate 11 and support the diffuser plate 11 through the contact portions 13b from the rear side (the side along arrow Y2) of the diffuser plate 11. The panel posts 13 each have a triangular shape, as viewed from the lateral side (along arrow X1) and are gradually tapered toward the diffuser plate 11. The panel posts 13 each also have a rectangular shape, as viewed from the front side (the side along arrow Y1). The contact portions 13b are examples of the "outer periphery of the support member" in the present invention.

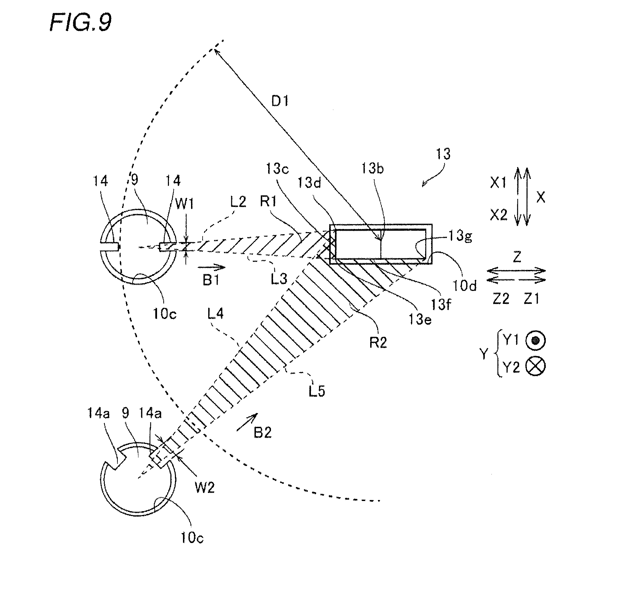

According to the first embodiment, the optical path changing members 14 are provided in a portion (in the vicinity of the light source openings 10c) of the reflection sheet 10, as shown in Figs. 6 and 9 and are integrally provided to protrude inward from the outer peripheries of the circular light source openings 10c on a side (a side along arrow B1 in Fig. 9) that faces the panel posts 13. The optical path changing members 14a are also integrally provided to protrude inward from the outer peripheries of the circular light source openings 10c on a side (a side along arrow B2 in Fig. 9) that faces the panel posts 13, similarly to the optical path changing members 14. As shown in Fig. 9, the optical path changing members 14 each are in a rectangular shape having a width W1 and a length L1 (see Fig. 6), as viewed from the front side (as viewed from the side along arrow Y1), and one side of the rectangle is connected to the outer periphery of a corresponding light source opening 10c. The optical path changing members 14a each are in a rectangular shape having a width W2 and a length L1 (see Fig. 6), as viewed from the front side (as viewed from the side along arrow Y1), and one side of the rectangle is connected to the outer periphery of a corresponding light source opening 10c.

According to the first embodiment, the optical path changing members 14 are arranged between at least LEDs 7 and light source lenses 9 arranged within distances D1 from the panel posts 13 of the plurality of LEDs 7 and the light source lenses 9 and the panel posts 13, as shown in Fig. 6. As shown in Fig. 9, in the panel posts 13, the cross-sections (planes that extend in the direction X and the direction Z) parallel to the diffuser plate 11 each have a rectangular shape, and the short sides (facing surfaces 13c) of the cross-sections face the LEDs 7 and the light source lenses 9 arranged within the distances D1. The distances D1 are examples of the "prescribed distance" in the present invention. According to the first embodiment, the optical path changing members 14a are provided also in light source openings 10c that correspond to LEDs 7 and light source lenses 9 located beyond the distances D1.

As shown in Fig. 9, the proportion of portions of surfaces of the light source lenses 9 arranged within the distances D1 that face the short sides (facing surfaces 13c) of the cross-sections is larger than the proportion of portions of the surfaces of the light source lenses 9 arranged within the distances D1 that face the long sides (facing surfaces 13f) of the cross-sections. In the case of an example shown in Fig. 9, a surface of a panel post 13 that faces a surface of a light source lens 9 arranged within a distance D1 is only a facing surface 13c, and the proportion of a portion of a surface of the light source lens 9 arranged within the distance D1 that faces the short side (facing surface 13c) of the cross-section is larger than the proportion of a portion of the surface of the light source lens 9 arranged within the distance D1 that faces the long side (facing surface 13f) of the cross-section.

According to the first embodiment, the optical path changing members 14 are provided across regions R1 formed by straight lines L2 that connect ends 13d (ends along arrow X1) of the facing surfaces 13c of the panel posts 13 and the LEDs 7 (the vicinities of the centers of the light source openings 10c) and straight lines L3 that connect ends 13e (ends along arrow X2) of the facing surfaces 13c of the panel posts 13 and the LEDs 7 (the vicinities of the centers of the light source openings 10c), as shown in Fig. 9. In other words, the optical path changing members 14 are arranged to block the regions R1 that connect the outer peripheries of the panel posts 13 as viewed from the LEDs 7 and the LEDs 7. Furthermore, the optical path changing members 14 are arranged in the regions R1 that connect the outer peripheries of the panel posts 13 that face the LEDs 7 and the LEDs 7. The ends 13d and the ends 13e are examples of the "the outer periphery of the support member" in the present invention.

As shown in Fig. 9, the optical path changing members 14a are provided across regions R2 formed by straight lines L4 that connect the ends 13d of facing surfaces 13c and 13f of the panel posts 13 and the LEDs 7 (the vicinities of the centers of the light source openings 10c) and straight lines L5 that connect ends 13g of the facing surfaces 13c and 13f of the panel posts 13 and the LEDs 7 (the vicinities of the centers of the light source openings 10c). In other words, the optical path changing members 14a are arranged to block the regions R2 that connect the outer peripheries of the panel posts 13 as viewed from the LEDs 7 and the LEDs 7. The ends 13g are examples of the "the outer periphery of the support member" in the present invention.

As shown in Figs. 3 and 9, the optical path changing members 14 come into contact with the light source lenses 9 and are located on the sides of the light source lenses 9 closer to the diffuser plate 11 (the side along arrow Y1). Specifically, in the liquid crystal television set 100, the optical path changing members 14 and the light source lenses 9 come into contact with each other when the LEDs 7 and the light source lenses 9 are covered with the reflection sheet 10, and the optical path changing members 14 are deformed (bent) toward the diffuser plate 11 (the side along arrow Y1) to protrude. Similarly, the optical path changing members 14a and the light source lenses 9 come into contact with each other, and the optical path changing members 14a are deformed (bent) toward the diffuser plate 11 (the side along arrow Y1) to protrude. As shown in Fig. 3, the optical path changing members 14 are deformed to protrude, whereby the optical path changing members 14 cross the optical path (straight lines L6) of direct light from the LEDs 7 to the contact portions 13b of the panel posts 13, as viewed from the lateral side (a side along arrow X2). In other words, in a direction (direction Y) perpendicular to the diffuser plate 11, the lengths h3 of the optical path changing members 14 are larger than lengths h4 from the reflection sheet bottom surface portion 10a to line segments (straight lines L6) that connect LEDs 7 that correspond to positions where the optical path changing members 14 are arranged and the contact portions 13b.

The optical path changing members 14 are formed integrally with the reflection sheet 10 and cross the optical path (straight lines L7) of direct light from the LEDs 7 to intersections C1 between the panel posts 13 and the reflection sheet 10. The optical path changing members 14 contact with the light source lenses 9 and are arranged at positions closer to the LEDs 7 than the panel posts 13. The optical path changing members 14a have the arrangement relationship with the panel posts 13 similar to that of the optical path changing members 14.

According to the first embodiment, the optical path changing members 14 (and the optical path changing members 14a) are arranged in the optical path of direct light from the LEDs 7 to the panel posts 13, as shown in Fig. 3. The optical path changing members 14 are arranged at positions where the relationship x < y is satisfied when x represents distances between the optical path changing members 14 and the LEDs 7 and y represents distances between the optical path changing members 14 and the panel posts 13. The reflection sheet 10, the optical path changing members 14, and the optical path changing member 14a reflect light, and hence the light emitted from the LEDs 7 toward the panel posts 13 is blocked (attenuated) and is reflected in a direction different from the side of the panel posts 13. The optical path changing members 14 and the optical path changing members 14a diffract the light from the LEDs 7. Thus, the direct light from the LEDs 7 that passes through the vicinities of ends of the optical path changing members 14 and the optical path changing members 14a is diffracted in the direction different from the side of the panel posts 13.

According to the first embodiment, the following effects can be obtained.

According to the first embodiment, as hereinabove described, the optical path changing members 14 have characteristics of blocking, diffracting, and attenuating the light. Furthermore, the optical path changing members 14 are arranged in the optical path of the direct light from the LEDs 7 to the panel posts 13 so as to block the direct light to the panel posts 13, whereby the amount of the direct light from the LEDs 7 to the panel posts 13 is reduced by the optical path changing members 14 and 14a, and hence shadows generated on the display portion 1, the diffuser plate 11, and the polarization filter 12 on the extension of the optical path blocked by the panel posts 13 is lightened due to the reduction in the amount of the direct light from the LEDs 7 to the panel posts 13. Consequently, viewing of a shadow generated on the display portion 1 can be significantly reduced or prevented. Thus, viewing of the shadow generated on the display portion 1 can be significantly reduced or prevented even in the case where the panel posts 13 are arranged at any positions, and hence the degree of freedom of arrangement of the panel posts 13 can be increased.

According to the first embodiment, as hereinabove described, the optical path changing members 14 are arranged with respect to all the (a plurality of) panel posts 13 that face the LEDs 7. Thus, the amount of the direct light to all the panel posts 13 is further reduced, and hence the shadows on the display portion 1 and the diffuser plate 11 caused by the direct light from the LEDs 7 can be lightened. Consequently, viewing of the shadow on the entire display portion 1 can be significantly reduced or prevented.

According to the first embodiment, as hereinabove described, the panel posts 13 include the facing surfaces 13c that face the LEDs 7, and the optical path changing members 14 are arranged across the regions R1 formed by the straight lines L2 that connect the ends 13d of the facing surfaces 13c of the panel posts 13 and the LEDs 7 and the straight lines L3 that connect the ends 13e of the facing surfaces 13c of the panel posts 13 and the LEDs 7, as viewed from the front side (the side along arrow Y1). Thus, the amount of the direct light from the LEDs 7 to the facing surfaces 13c of the panel posts 13 is further reduced as compared with the case where the optical path changing members 14 are arranged inside the regions R1 formed by the straight lines L2 and the straight lines L3 and the case where the optical path changing members 14 are arranged across only one of the straight lines L2 and the straight lines L3, and hence the shadows on the display portion 1, the diffuser plate 11, and the polarization filter 12 can be further lightened. Consequently, viewing of the shadow generated on the display portion 1 can be further significantly reduced or prevented.

According to the first embodiment, as hereinabove described, the panel posts 13 include the contact portions 13b that come into contact with the diffuser plate 11, and the optical path changing members 14 are arranged across the optical path (the straight lines L6 in Fig. 3) of the direct light from the LEDs 7 to the contact portions 13b in a side elevational view (see Fig. 3). Thus, the amount of the direct light from the LEDs 7 to the vicinities of the contact portions 13b of the panel posts 13 is reduced, and hence the shadows generated on the display portion 1, the diffuser plate 11, and the polarization filter 12 on the extension of the optical path blocked by the vicinities of the contact portions 13b of the panel posts 13 is lightened. Consequently, viewing of the shadow generated on the display portion 1 in the vicinity of the contact portions 13b of the panel posts 13 can be significantly reduced or prevented. Generally, the shadow generated on the display portion 1 in the vicinity of the contact portions 13b of the panel posts 13 is easily viewed, and hence as in the first embodiment, viewing of the shadow on the display portion 1 in the vicinity of the contact portions 13b of the panel posts 13 is significantly reduced or prevented, whereby viewing of the shadow generated on the display portion 1 can be more effectively significantly reduced or prevented.

According to the first embodiment, as hereinabove described, the liquid crystal television set 100 further includes the reflection sheet 10 arranged on the rear side (the side along arrow Y2) of the diffuser plate 11, capable of reflecting the light emitted from the LEDs 7, the panel posts 13 are provided to protrude from the reflection sheet 10 toward the diffuser plate 11, and the optical path changing members 14 are arranged across the optical path (straight lines L7) of the direct light from the LEDs 7 to the intersections C1 between the panel posts 13 and the reflection sheet 10 in the side elevational view (see Fig. 3). Thus, the amount of the direct light from the LEDs 7 in portions of the panel posts 13 that extend from the intersections C1 between the panel posts 13 and the reflection sheet 10 toward the diffuser plate 11 can be reduced, and hence viewing of the shadow generated on the display portion 1 can be more reliably significantly reduced or prevented.

According to the first embodiment, as hereinabove described, the optical path changing members 14 are arranged at the positions where the relationship x < y is satisfied when x represents the distances between the optical path changing members 14 and the LEDs 7 and y represents the distances between the optical path changing members 14 and the panel posts 13. Thus, distances from the optical path changing members 14 to the diffuser plate 11 are increased as compared with the case where the optical path changing members 14 are arranged at positions where the relationship x ≥ y is satisfied. The distances from the optical path changing members 14 to the diffuser plate 11 are increased, and hence other light (light from another LED 7, for example) comes around the sides of the optical path changing members 14 on which shadows are generated. Thus, shadows generated by emission of light to the optical path changing members 14 can be further lightened. Furthermore, the direct light from the LEDs 7 to the panel posts 13 is emitted to be widened from the LEDs 7, and hence an increase in the size of the optical path changing members 14 can be significantly reduced or prevented by the small distances between the optical path changing members 14 and the LEDs 7, as compared with the case where the optical path changing members 14 are arranged at positions closer to the panel posts 13 than the LEDs 7.

According to the first embodiment, as hereinabove described, the liquid crystal television set 100 further includes the reflection sheet 10 arranged on the rear side (the side along arrow Y2 in Fig. 3) of the diffuser plate 11, capable of reflecting the light emitted from the LEDs 7, and the optical path changing members 14 are provided integrally with the reflection sheet 10 to protrude from the reflection sheet 10 toward the diffuser plate 11 (the side along arrow Y1 in Fig. 3), and block and reflect the light emitted from the LEDs 7 toward the panel posts 13. Thus, an increase in the number of components can be significantly reduced or prevented unlike the case where the optical path changing members 14 and the reflection sheet 10 are provided separately from each other, and hence complication of the structure of the liquid crystal television set 100 can be significantly reduced or prevented even in the case where the optical path changing members 14 are provided.

According to the first embodiment, as hereinabove described, the plurality of LEDs 7 are provided, and the optical path changing members 14 are arranged between the LEDs 7 arranged within the distances D1 from the panel posts 13 of the plurality of LEDs 7 and the panel posts 13. In the case where the plurality of LEDs 7 are provided, the amount of direct light from LEDs 7 arranged relatively close to the panel posts 13 of the plurality of LEDs 7 is relatively large in the direct light emitted to the panel posts 13. In view of this point, according to the first embodiment, the optical path changing members 14 are arranged between the LEDs 7 arranged within the distances D1 from the panel posts 13 of the plurality of LEDs 7 and the panel posts 13, whereby the amount of the direct light from the LEDs 7 (the LEDs 7 arranged relatively close to the panel posts 13) arranged within the distances D1 can be reduced. Consequently, the shadows generated on the display portion 1 and the diffuser plate 11 on the extension of the optical path blocked by the panel posts 13 can be effectively lightened.

According to the first embodiment, as hereinabove described, in the panel posts 13, the cross-sections parallel to the diffuser plate 11 each have the rectangular shape, and the short sides (facing surfaces 13c) of the cross-sections face the LEDs 7 and the light source lenses 9 arranged within the distances D1. In the case where in the panel posts 13, the cross-sections parallel to the diffuser plate 11 each have the rectangular shape, shadows are more easily generated on the display portion 1 and the diffuser plate 11 on the extension of the optical path blocked by the panel posts 13 in the case where the direct light from the LEDs 7 is emitted to the short sides (facing surfaces 13c) of the cross-sections as compared with the case where the direct light from the LEDs 7 is emitted to the long sides (facing surfaces 13f) of the cross-sections. Focusing on this point, according to the first embodiment, the optical path changing members 14 are arranged between the LEDs 7 arranged within the distances D1 from the panel posts 13 of the plurality of LEDs 7 and the panel posts 13, and the short sides (facing surfaces 13c) of the cross-sections face the LEDs 7 arranged within the distances D1, whereby the shadows on the display portion 1 and the diffuser plate 11 caused by the direct light emitted to the short sides (facing surfaces 13c) of the cross-sections where shadows are relatively easily generated can be more effectively lightened.

According to the first embodiment, as hereinabove described, the proportion of the portions of the surfaces of the LEDs 7 arranged within the distances D1 that face the short sides (facing surfaces 13c) of the cross-sections is larger than the proportion of the portions of the surfaces of the LEDs 7 arranged within the distances D1 that face the long sides (facing surfaces 13f) of the cross-sections. Thus, the amount of the direct light emitted to the short sides (facing surfaces 13c) of the cross-sections on which shadows are relatively easily generated can be more reliably reduced, and hence the shadows generated on the display portion 1 and the diffuser plate 11 can be more reliably lightened.

According to the first embodiment, as hereinabove described, the panel posts 13 are gradually tapered toward the diffuser plate (the side along arrow Y1). A shadow is easily generated on the diffuser plate 11 in the vicinity of the panel posts 13, and hence the panel posts 13 are preferably relatively thinned. When the panel posts 13 are relatively thinned, however, it is difficult to ensure the strength of the panel posts 13. Regarding these points, according to the first embodiment, the panel posts 13 are gradually tapered toward the diffuser plate 11, whereby portions of the panel posts 13 closer (the side along arrow Y1) to the diffuser plate 11 can be relatively thinned, and portions of the panel posts 13 opposite (the side along arrow Y2) to the diffuser plate 11 can be relatively thickened. Consequently, generation of a shadow on the diffuser plate 11 in the vicinity of the panel posts 13 can be significantly reduced or prevented by relatively thinning the portions of the panel posts 13 closer to the diffuser plate 11 while the strength of the panel posts 13 are increased by relatively thickening the portions of the panel posts 13 opposite to the diffuser plate 11.

According to the first embodiment, as hereinabove described, the reflection sheet 10 includes the reflection sheet bottom surface portion 10a and the reflection sheet inclined portions 10b that surround the reflection sheet bottom surface portion 10a and reflects the light from the LEDs 7, and the panel posts 13 are located in the reflection sheet inclined portions 10b. Thus, the lengths (the heights h1 and the heights h2) of the panel posts 13 between the reflection sheet 10 and the diffuser plate 11 can be reduced as compared with the case where the panel posts 13 are located in the reflection sheet bottom surface portion 10a, and hence generation of the shadows on the display portion 1 and the diffuser plate 11 resulting from emission of the direct light to the panel posts 13 can be significantly reduced or prevented by the reduction in the lengths of the panel posts 13.

According to the first embodiment, as hereinabove described, the LEDs 7, the light source lenses 9, and the optical path changing members 14 are located in the reflection sheet bottom surface portion 10a. Thus, the optical path changing members 14 can be arranged at the positions closer to the LEDs 7 than the panel posts 13 arranged in the reflection sheet inclined portions 10b, and hence an increase in the size of the optical path changing members 14 can be significantly reduced or prevented by the small distances between the optical path changing members 14 and the LEDs 7, as compared with the case where the optical path changing members 14 are arranged at the positions closer to the panel posts 13 than the LEDs 7.

According to the first embodiment, as hereinabove described, the panel posts 13 are made of the transparent or translucent members. Thus, transmission of the light from the LEDs 7 is allowed, and hence generation of the shadows on the display portion 1 and the diffuser plate 11 can be significantly reduced or prevented as compared with the case where the panel posts 13 are light-blocking and block the light from the LEDs 7.

According to the first embodiment, as hereinabove described, the panel posts 13 include the contact portions 13b that come into contact with the diffuser plate 11, and the lengths (heights h3) of the optical path changing members 14 are larger than the lengths (heights h4) from the reflection sheet bottom surface portion 10a to the line segments (straight lines L6) that connect the LEDs 7 that correspond to the positions where the optical path changing members 14 are arranged and the contact portions 13b in the direction (direction Y) perpendicular to the diffuser plate 11. Thus, the amount of the direct light emitted from the LEDs 7 to the vicinities of the contact portions 13b of the panel posts 13 can be reduced, and hence the shadows generated on the display portion 1 and the diffuser plate 11 on the extension of the optical path blocked by the vicinities of the contact portions 13b of the panel posts 13 can be lightened. Consequently, viewing of the shadow generated on the display portion 1 in the vicinity of the contact portions 13b of the panel posts 13 can be significantly reduced or prevented. Generally, the shadow generated on the display portion 1 in the vicinity of the contact portions 13b of the panel posts 13 is easily viewed, and hence as in the first embodiment, viewing of the shadow on the display portion 1 in the vicinity of the contact portions 13b of the panel posts 13 is significantly reduced or prevented, whereby viewing of the shadow generated on the display portion 1 can be more effectively significantly reduced or prevented.

According to the first embodiment, as hereinabove described, the plurality of panel posts 13 are provided and are arranged at the positions line-symmetric with respect to the LEDs 7 (with respect to the centerline C3 in Fig. 6), as viewed from the side of the diffuser plate 11 (the side along arrow Y1). Thus, the amount of shadowing caused by emission of the direct light to the panel posts 13 arranged on one side (the side along arrow Z1) with respect to the LEDs 7 is equal to the amount of shadowing caused by emission of the direct light to the panel posts 13 arranged on the other side (the side along arrow Z2) with respect to the LEDs 7, and hence unevenness of luminance on the entire display portion 1 and the entire diffuser plate 11 can be reduced.

According to the first embodiment, as hereinabove described, the optical path changing members 14 are provided in the portion (light source opening 10c) of the reflection sheet 10. Thus, an increase in the number of types of components in the liquid crystal television set 100 can be significantly reduced or prevented.

According to the first embodiment, as hereinabove described, in the reflection sheet 10, the light source openings 10c are provided at the positions that correspond to the arrangement positions of the plurality of LEDs 7, and the optical path changing members 14 are provided in (in the vicinity of) the light source openings 10c. Thus, the optical path changing members 14 can be arranged at the positions closer to the LEDs 7 than the panel posts 13, and hence an increase in the size of the optical path changing members 14 can be further significantly reduced or prevented by the small distances between the optical path changing members 14 and the LEDs 7, as compared with the case where the optical path changing members 14 are arranged at the positions closer to the panel posts 13 than the LEDs 7.

According to the first embodiment, as hereinabove described, the LEDs 7 and the light source lenses 9 that cover the LEDs 7 are provided, and the optical path changing members 14 come into contact with the light source lenses 9 and are located on the sides of the light source lenses 9 closer to the diffuser plate 11. Thus, the optical path changing members 14 are deformed in contact with the light source lenses 9 when the LEDs 7 and the light source lenses 9 are covered with the reflection sheet 10, whereby the optical path changing members 14 can protrude from the light source openings 10c toward the diffuser plate 11. Consequently, the number of steps required to assemble the liquid crystal television set 100 can be reduced as compared with the case where the reflection sheet 10 and the optical path changing members 14 are assembled (mounted) individually.

### (Second Embodiment)

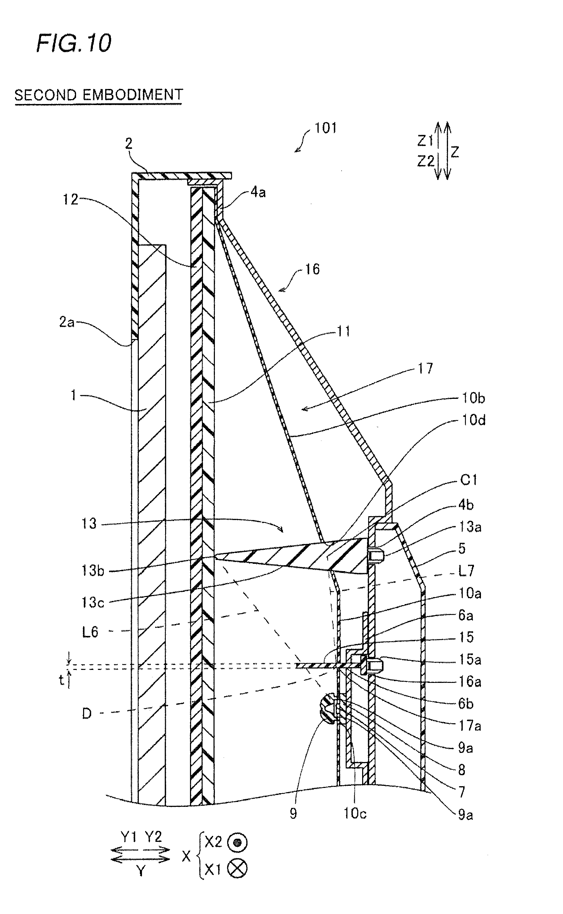

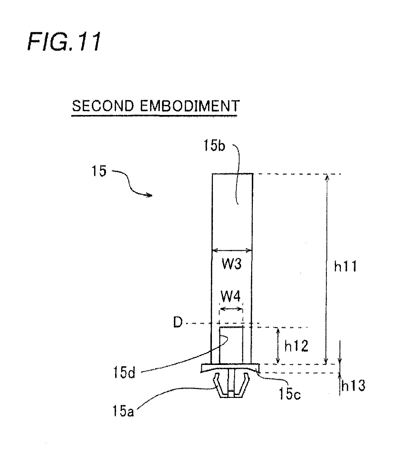

The structure of a liquid crystal television set 101 according to a second embodiment is now described with reference to Figs. 10 and 11. In the second embodiment, optical path changing members and a refection sheet are provided separately from each other, unlike the liquid crystal television set 100 according to the first embodiment in which the optical path changing members and the reflection sheet are integrally formed.

As shown in Fig. 10, the liquid crystal television set 101 includes optical path changing members 15, a rear frame 16, a reflection sheet 17, and a heat sink 6a. According to the second embodiment, the optical path changing members 15 contain a diffusion material (titanium oxide or the like, for example) and can diffuse light. The optical path changing members 15 include mounting portions 15a, and the rear frame 16 includes openings 16a provided to allow the mounting portions 15a of the optical path changing members 15 to be fixedly fitted thereinto. The mounting portions 15a are fitted into the openings 16a, whereby the optical path changing members 15 are fixed to the rear frame 16 and protrude toward a diffuser plate 11 (a side along arrow Y1). The reflection sheet 17 and the heat sink 6a are provided with optical path changing member openings 17a and optical path changing member openings 6b, respectively, and the optical path changing member openings 17a and the optical path changing member openings 6b are provided to allow the optical path changing members 15 fixed to the rear frame 16, arranged to protrude toward the diffuser plate 11 to pass therethrough.

As shown in Fig. 11, the optical path changing members 15 include optical path changing member body portions 15b, optical path changing member base portions 15c, and openings 15d. The optical path changing member body portions 15b protrude from the reflection sheet 17 toward the diffuser plate 11 and each are in a flat plate shape having a width W3, a height h11 (a height from the upper surface of an optical path changing member base portion 15c), and a thickness t (see Fig. 10). The optical path changing member body portions 15b are arranged such that wide side surfaces thereof (side surfaces each having a width W3) each in a flat plate shape face LEDs 7. Similarly to the optical path changing members 14 according to the first embodiment, the optical path changing members 15 are arranged in the optical path of direct light from the LEDs 7 to panel posts 13. In other words, the optical path changing members 15 are arranged across straight lines L6 and L7. The optical path changing member base portions 15c each have a height h13 from the rear frame 16 toward the diffuser plate 11 and come into contact with the rear frame 16.

As shown in Fig. 11, the openings 15d each are opened in a rectangular shape having a width W4 and a height h12 (a height from the upper surface of the optical path changing member base portion 15c) to pass through the optical path changing member body portions 15b from wide side surfaces thereof on one side (a side along arrow Z1) to wide side surfaces thereof on the other side (a side along arrow Z2). The openings 15d are provided in the optical path changing members 15 on the rear side (a side along arrow Y2) beyond positions D (see Fig. 10) where the straight lines L7 and the optical path changing members 15 intersect with each other. The remaining structure of the liquid crystal television set 101 according to the second embodiment is similar to that of the liquid crystal television set 100 according to the first embodiment.

According to the second embodiment, the following effects can be obtained.

According to the second embodiment, as hereinabove described, the optical path changing members 15 and the reflection sheet 17 are provided separately from each other, and the optical path changing members 15 can diffuse light by the diffusion material (titanium oxide or the like, for example). Thus, the amount of diffusion material contained in the optical path changing members 15 can be adjusted unlike the case where the optical path changing members 15 and another component are integrally formed, and hence the amount of the direct light from the LEDs 7 to the panel posts 13 can be more accurately adjusted. Consequently, viewing of a shadow generated on the display portion 1 can be more effectively significantly reduced or prevented.

According to the second embodiment, as hereinabove described, the optical path changing members 15 are provided with the openings 15d opened in the rectangular shape to pass through the optical path changing member body portions 15b from the wide side surfaces thereof on one side to the wide side surfaces thereof on the other side, and the openings 15d are provided in the optical path changing members 15 on the rear side (the side along arrow Y2) beyond the positions D (see Fig. 10) where the straight lines L7 and the optical path changing members 15 intersect with each other. Thus, light from the LEDs 7 toward the panel posts 13 through the rear side (the side along arrow Y2) beyond the positions D (see Fig. 10) is not directly emitted to the panel posts 13 but is emitted to the reflection sheet 17, and hence a loss of light resulting from emission of the light to the optical path changing members 15 can be reduced while significantly reducing or preventing viewing of the shadow generated on the display portion 1. The remaining effects of the liquid crystal television set 101 according to the second embodiment are similar to those of the liquid crystal television set 100 according to the first embodiment.

### (Third Embodiment)

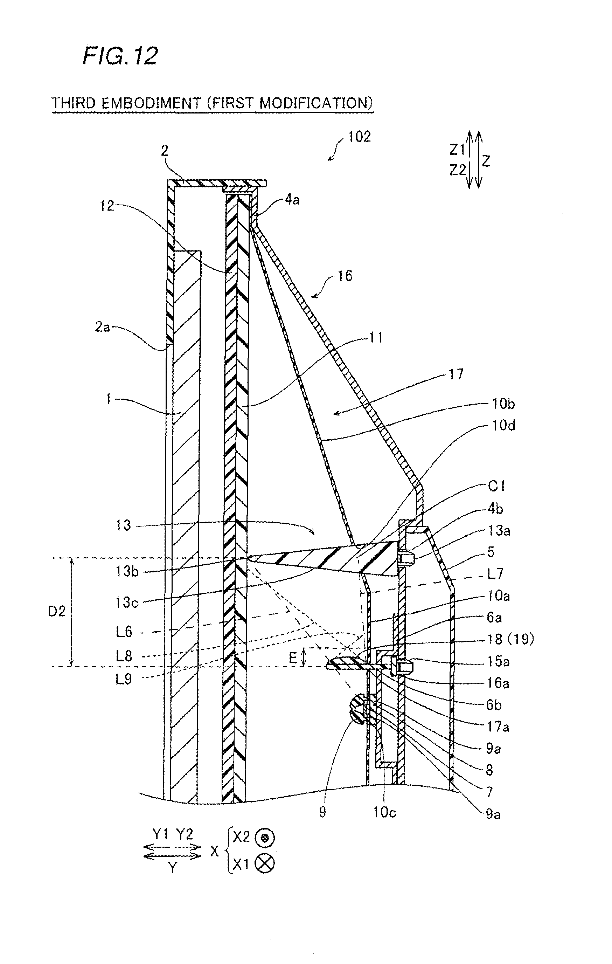

The structure of a liquid crystal television set 102 according to a third embodiment is now described with reference to Fig. 12. In the third embodiment, optical path changing members each are in the form of a lens and refract light emitted from LEDs toward panel posts.

As shown in Fig. 12, the liquid crystal television set 102 includes optical path changing members 18, a rear frame 16, a reflection sheet 17, and a heat sink 6a. The rear frame 16, the reflection sheet 17, and the heat sink 6a have the same shapes as the rear frame 16, the reflection sheet 17, and the heat sink 6a of the light crystal television set 101 according to the second embodiment, respectively. Mounting portions 15a are fitted into openings 16a, whereby the optical path changing members 18 are fixed to the rear frame 16 and protrude toward a diffuser plate 11 (a side along arrow Y1). The reflection sheet 17 and the heat sink 6a are provided with optical path changing member openings 17a and optical path changing openings 6b, respectively, and the optical path changing member openings 17a and the optical path changing openings 6b are provided to allow the optical path changing members 18 fixed to the rear frame 16, arranged to protrude toward the diffuser plate 11 to pass therethrough.

According to the third embodiment, in the optical path changing members 18, portions that protrude from the reflection sheet 17 toward the diffuser plate 11 each are in a convex lens shape, as shown in Fig. 12, and the optical path changing members 18 are arranged in the optical path of direct light from LEDs 7 to panel posts 13, similarly to the optical path changing members 14 according to the first embodiment. In other words, the optical path changing members 18 are arranged across straight lines L6 and L7. As shown in Fig. 12, after incident on the optical path changing members 18, the light emitted from the LEDs 7 is refracted and condensed to a position separated by a distance E from the optical path changing members 18. In other words, the focal distances (distances E) of the optical path changing members 18 are smaller than distances D2 between the optical path changing members 18 and the panel posts 13.

The optical path changing members 18 transmit and refract the light from the LEDs 7 that passes through regions formed by the straight lines L6 that connect the LEDs 7 and contact portions 13b and the straight lines L7 that connect the LEDs 7 and intersections C1 so as to change the optical path from the LEDs 7. The optical path of the light from the LEDs 7 is changed such that the same is emitted to wider ranges (regions formed by straight lines L8 and straight lines L7) than the regions formed by the straight lines L6 that connect the LEDs 7 and the contact portions 13b and the straight lines L7 that connect the LEDs 7 and the intersections C1. Thus, the amount of the direct light from the LEDs 7 to the panel posts 13 can be reduced. The remaining structure of the liquid crystal television set 102 according to the third embodiment is similar to that of the liquid crystal television set 100 according to the first embodiment.

According to the third embodiment, the following effects can be obtained.

According to the third embodiment, as hereinabove described, the optical path changing members 18 each are in the form of the lens, transmit the direct light from the LEDs 7 to the panel posts 13, and refract the direct light. Thus, the amount of the direct light from the LEDs 7 to the panel posts 13 can be reduced. Consequently, shadows generated on a display portion 1 and a diffuser plate 11 on the extension of the optical path blocked by the panel posts 13 are lightened, and hence viewing of a shadow generated on the display portion 1 can be significantly reduced or prevented. Furthermore, light emitted to the optical path changing members 18 is refracted, and hence a larger amount of the light emitted from the LEDs 7 can be emitted to the display portion 1 as compared with the case where the optical path changing members 18 absorb the light.

According to the third embodiment, as hereinabove described, the focal distances E of the optical path changing members 18 are smaller than the distances D2 between the optical path changing members 18 and the panel posts 13. Thus, after condensed between the optical path changing members 18 and the panel posts 13, the light incident on the optical path changing members 18 is magnified and emitted to the panel posts 13, and hence the amount of the light emitted to the panel posts 13 can be reduced. Consequently, viewing of the shadow generated on the display portion 1 can be further significantly reduced or prevented.

The remaining effects of the liquid crystal television set 102 according to the third embodiment are similar to those of the liquid crystal television set 100 according to the first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the liquid crystal television set is employed as the display device according to the present invention in each of the aforementioned first to third embodiments, the present invention is not restricted to this. According to the present invention, a device other than the liquid crystal television set may alternatively be employed as the display device. For example, a common display device such as a display device for a PC (personal computer) may alternatively be employed.

While the optical path changing members according to the present invention each are in the rectangular shape, as viewed from the front side in the aforementioned first embodiment, the present invention is not restricted to this. According to the present invention, the optical path changing members each may alternatively be in a shape other than the rectangular shape. The optical path changing members each may be in a sectorial shape, for example.

While the optical path changing members according to the present invention are deformed in contact with the reflection sheet when the light source lenses are covered with the reflection sheet so as to protrude toward the diffuser plate in the aforementioned first embodiment, the present invention is not restricted to this. According to the present invention, the optical path changing members may alternatively be formed to previously protrude toward the diffuser plate.

While the optical path changing members according to the present invention are made of a plastic material in the aforementioned second embodiment, the present invention is not restricted to this. According to the present invention, the optical path changing members may alternatively be made of a material other than the plastic material. The optical path changing members may be made of a metal material or a glass material, for example.

While the optical path changing members according to the present invention each are in the flat plate shape in the aforementioned second embodiment, the present invention is not restricted to this. According to the present invention, the optical path changing members each may alternatively be in a shape other than the flat plate shape. The optical path changing members each may be in a cylindrical shape, for example.

While the optical path changing members according to the present invention diffuse the light emitted from the LEDs to the panel posts in the aforementioned second embodiment, the present invention is not restricted to this. The optical path changing members may alternatively be colored in black, and absorb and block the direct light from the LEDs to the panel posts, for example.

While the optical path changing members according to the present invention each are in the convex lens shape in the aforementioned third embodiment, the present invention is not restricted to this. According to the present invention, the optical path changing members each may alternatively be in a shape other than the convex lens shape. For example, the optical path changing members each may be in a concave lens shape, and the amount of the direct light from the LEDs to the panel posts may be reduced.

While the optical path changing members according to the present invention each are in the convex lens shape and refract the direct light from the LEDs to the panel posts in the aforementioned third embodiment, the present invention is not restricted to this. For example, the optical path changing members each in the convex lens shape may alternatively further contain a diffusion material, or surfaces of the optical path changing members may alternatively be crimped (include crimped surfaces) thereby refracting and diffusing the direct light from the LEDs to the panel posts, so that the amount of the direct light from the LEDs to the panel posts may be reduced. For example, optical path changing members 19 may have crimped surfaces, as shown in Fig. 12.

The optical path changing members 19 according to a first modification of the third embodiment have the crimped surfaces, as shown in Fig. 12. Thus, direct light from LEDs 7 can be diffused by the crimped surfaces of the optical path changing members 19, and hence the amount of the direct light from the LEDs 7 to panel posts 13 can be easily reduced.

While the panel posts according to the present invention each have the triangular shape in each of the aforementioned first to third embodiments, the present invention is not restricted to this. According to the present invention, the panel posts each may alternatively have a shape other than the triangular shape. The panel posts each may have a cylindrical shape or a flat plate shape, for example.

While the LEDs are employed as the light sources according to the present invention in each of the aforementioned first to third embodiments, the present invention is not restricted to this. According to the present invention, light sources other than the LEDs may alternatively be employed as the light sources. For example, line light sources such as cold cathode fluorescent lamps may be employed as the light sources.

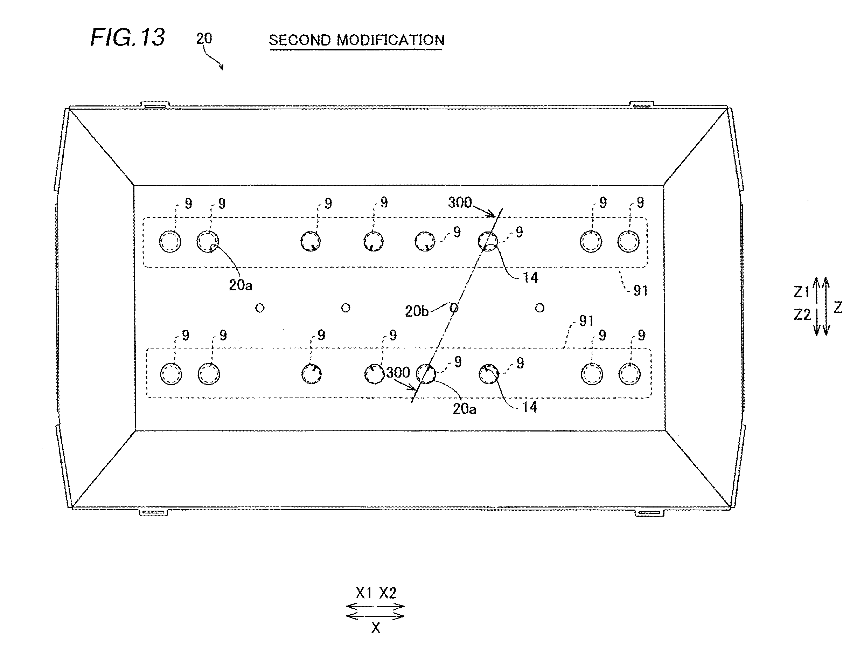

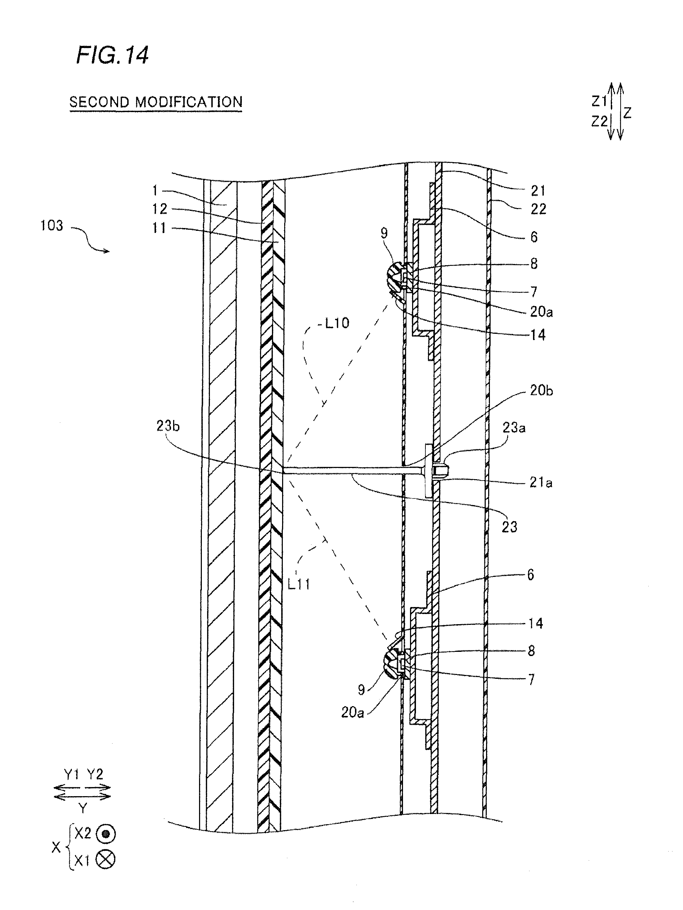

While the LEDs are aligned in a row at the intervals as the arrangement of the light sources according to the present invention in each of the aforementioned first to third embodiments, the present invention is not restricted to this. According to the present invention, the LEDs may alternatively be arranged in the manner other than in a row as the arrangement of the light sources. For example, the LEDs may be arranged in two rows, as shown in Figs. 13 and 14.

A liquid crystal television set 103 according to a second modification of the first to third embodiments includes a reflection sheet 20, a rear frame 21, a cover member 22, and panel posts 23, as shown in Figs. 13 and 14. As shown in Fig. 13, in the liquid crystal television set 103, LEDs 7 are arranged in rows (in columns) at intervals, a plurality of point light source groups 91 arranged at an interval are provided, the panel posts 23 are arranged between the plurality of point light source groups 91, and optical path changing members 14 are arranged between light source lenses 9 arranged closest to the panel posts 23 in the plurality of point light source groups 91 and the panel posts 23. Specifically, the reflection sheet 20 are provided with light source openings 20a at positions that correspond to the LEDs 7 and light source lenses 9 (eight LEDs 7 and eight light source lenses 9 are arranged in each row at prescribed intervals) arranged in two rows, setting a right-left direction (direction X) as a row. In light source openings 20a (eight of sixteen light source openings 20a) in the vicinity of a central portion of the reflection sheet 20, the optical path changing members 14 are provided. The optical path changing members 14 each have the same shape as those of the optical path changing members 14 according to the first embodiment.

As shown in Figs. 13 and 14, two heat sinks 6 are aligned in a vertical direction (direction Z) in the rear frame 21, and substrates 8 are arranged on the respective upper surfaces of the two heat sinks 6. Furthermore, the eight LEDs 7 are arranged on the upper surfaces of the substrates 8. Four panel posts 23 each having a cylindrical shape are aligned in a row at prescribed intervals between positions (between rows) where the LEDs 7 are arranged in two rows.

As shown in Fig. 14, the panel posts 23 are provided with fixing portions 23a in lower portions thereof and are fixed to the rear frame 21. The shapes of the fixing portions 23a are the same as those of the fixing portions 13a of the panel posts 13 according to the first embodiment. The panel posts 23 include contact portions 23b that come into contact with a diffuser plate 11, and two optical path changing members 14 that face a panel post 23 are arranged across the optical path (straight lines L10 and straight lines L11) of direct light from the LEDs 7 to the contact portions 23b. Thus, the amount of the direct light from the LEDs 7 to the panel posts 23 can be reduced.

According to the second modification, as hereinabove described, the LEDs 7 are arranged in rows or in columns at the intervals, the plurality of point light source groups 91 arranged at the interval are provided, the panel posts 23 are arranged between the plurality of point light source groups 91, and the optical path changing members 14 are arranged between LEDs 7 (and the light source lenses 9) arranged closest to the panel posts 23 of a plurality of LEDs 7 and the panel posts 23. In the case where there are the plurality of LEDs 7, shadows caused by emission of light from the LEDs 7 arranged closest thereto of the plurality of LEDs 7 to the panel posts 23 are most easily viewed. In view of this point, according to the second modification, the optical path changing members 14 are arranged between the LEDs 7 arranged closest to the panel posts 23 of the plurality of LEDs 7 and the panel posts 23, whereby the amount of direct light emitted from the LEDs 7 arranged closest thereto to the panel posts 23 can be reduced. Consequently, shadows generated on a display portion 1 and the diffuser plate 11 on the extension of the optical path blocked by the panel posts 23 can be more effectively lightened.

## Claims

1. A display device (100, 101, 102, 103) comprising:
a display portion (1);
a light source (7, 9) arranged on a rear side of the display portion;
an optical member (11, 12) arranged between the display portion and the light source;
a support member (13, 23) that supports a surface side of the optical member on which the light source is arranged; and
an optical path changing member (14, 14a, 15, 18, 19) arranged in an optical path of direct light from the light source to the support member.

2. The display device according to claim 1, wherein
the optical path changing member has at least one property of light-blocking, diffusing, refracting, diffracting, and attenuating.

3. The display device according to claim 1 or 2, wherein
the optical path changing member is arranged in a region that connects an outer periphery (13b, 13d, 13e, 13g, 23b) of the support member that faces the light source and the light source.

4. The display device according to any of claims 1 to 3, wherein
a plurality of optical path changing members are arranged with respect to a plurality of support members that face the light source.

5. The display device according to any of claims 1 to 4, wherein
the optical path changing member is arranged at a position where a relationship x < y is satisfied when x represents a distance between the optical path changing member and the light source and y represents a distance between the optical path changing member and the support member.

6. The display device according to any of claims 1 to 5, wherein
a plurality of light sources are provided, and
the optical path changing member is arranged between at least the light source arranged within a prescribed distance from the support member of the plurality of light sources and the support member.

7. The display device according to claim 6, wherein
in the support member, a cross-section parallel to the optical member has a rectangular shape, and a short side (13c) of the cross-section faces the light source arranged within the prescribed distance.

8. The display device according to claim 7, wherein
a proportion of a portion of a surface of the light source arranged within the prescribed distance that faces the short side of the cross-section is larger than a proportion of a portion of the surface of the light source arranged within the prescribed distance that faces a long side (13f) of the cross-section.

9. The display device according to claim 6, wherein
the support member is gradually tapered toward the optical member.

10. The display device according to any of claims 1 to 9, further comprising a reflection sheet (10) that includes a bottom surface portion (10a) and an inclined portion (10b) that surrounds the bottom surface portion and reflects light from the light source, wherein
the support member is located in the inclined portion of the reflection sheet.

11. The display device according to claim 10, wherein
the light source and the optical path changing member are located in the bottom surface portion.

12. The display device according to any of claims 1 to 11, wherein
the support member is made of a transparent or translucent member.

13. The display device according to claim 6, wherein
the light source includes a plurality of point light source groups (91) arranged at an interval, where a plurality of point light sources (7, 9) are arranged in a row or in a column at an interval,
the support member is arranged between the plurality of point light source groups, and
the optical path changing member is arranged between a point light source arranged closest to the support member of the plurality of point light sources and the support member.

14. The display device according to claim 11, wherein
the support member includes a contact portion (13b) that comes into contact with the optical member, and
in a direction perpendicular to the optical member, a length of the optical path changing member is larger than a length from the bottom surface portion to a line segment that connects the light source that corresponds to a position where the optical path changing member is arranged and the contact portion.

15. The display device according to any of claims 1 to 14, wherein
a plurality of support members are provided, and
the plurality of support members are arranged at positions line-symmetric with respect to the light source, as viewed from a side of the optical member.
